Europäisches Patentamt

European Patent Office

Office européen des brevets

(19)

(11) Publication number: **0 504 961 A1**

# EUROPEAN PATENT APPLICATION

(12)

(21) Application number: **92200595.4**

(22) Date of filing: **02.03.92**

(51) Int. Cl.⁵: **B42B 5/10, B29C 61/06**

(30) Priority: **18.03.91 BE 9100282**

(43) Date of publication of application:
**23.09.92 Bulletin 92/39**

(84) Designated Contracting States:
**AT BE CH DE DK ES FR GB GR IT LI LU MC NL PT SE**

(71) Applicant: **UNIBIND (CYPRUS) LIMITED**
**Margarita House 15, Them. Dervis Street**
**Nicosia 136(CY)**

(72) Inventor: **Peleman, Guido**
**Jan Van Rijswijcklaan 76**
**B-2018 Antwerpen(BE)**

(74) Representative: **Donné, Eddy**
**Bureau M.F.J. Bockstael nv Arenbergstraat 13**
**B-2000 Antwerpen(BE)**

(54) **Process for the realization of binding elements.**

(57) Process for the realization of binding elements, characterised in that it consists in the extrusion of a cylindrical element (5) with overlapping edges (6-7); the reshaping to a flat strip (8) of this cylindrical element; the realization of teeth (3) in this strip (8); and the release of the above mentioned flat strip (8), so that the latter automatically returns to its cylindrical shape.

Fig. 3

EP 0 504 961 A1

This invention relates to a process for the realization of binding elements, more specifically binding backs, in other words means to bind documents, whereby to that end the binding elements are formed by a cylindrical element with overlapping free edges, one of which is fitted with teeth which can penetrate perforations in the documents, or the like, to be bound.

It is known that such binding elements were until now realized starting from a flat, thin strip of polyvinyl chloride to which the required profile is applied, normally through cutting, after which the profiled strip is heated and rolled around a stave in order to obtain that an above mentioned cylindrical element with overlapping edges is obtained.

A first disadvantage of this known process is that it is very labour intensive, which makes the cost of the finished product very high, which is due amongst other things, to the fact that the manufacture of such binding elements is done manually which has an adverse effect on the cost price.

Another disadvantage of this process is seen in the fact that one starts from a flat strip which then has to be deformed cylindrically lengthwise so that, as it were against the memory of the synthetic material, a deformation must be obtained and maintained. Indeed in such case the material will always try to return to its flat shape.

The present invention relates to a process for the realization of binding elements of the above mentioned type, which totally eliminates the above mentioned and other disadvantages of existing processes for the realization of such binding elements.

To this end the process according to the invention consists in the realization of binding elements, characterised in that it consists in the extrusion of a cylindrical element with overlapping edges; the reformation of this cylindrical element to a flat strip; the realization of teeth in this strip; and the release of the above mentioned flat strip, so that the latter automatically returns to its cylindrical shape.

A first advantage of this process is, therefore, the fact that the binding elements of the above mentioned type can be manufactured with a very simple installation, thus making the cost price very low.

Another advantage of this process according to the invention consists in that one starts with a cylindrical element, the shape of which corresponds with that of the cylindrical binding element to be manufactured, in such a way that the memory of the material is geared to this cylindrical shape, so that, during the flattening of this material in order to fashion it, the material will tend to return again and again to the eventually desired cylindrical shape.

Yet another advantage of the process according to the invention is that such a binding element, during extrusion, can easily be fitted with flat parts, label holders etc.

Another advantage of the process according to the invention is that by starting from an extruded cyclindrical element, synthetic materials which cannot be used by the existing methods can be used.

Indeed the present invention allows the use of polyvinyl chloride as well as polystyrene, polypropylene etc., synthetic materials which are too elastic to be used with the extending methods, where it is necessary to start with a flat type of synthetic material which has to be reshaped cylindrically, as the memory of such elastic synthetic materials to return to their original shape is very strong.

In order to better demonstrate the characteristics of the invention, the process according to the invention is described hereafter as an example without any restrictive character, with reference to the drawings, wherein:

figure 1 is a representation in perspective of a binding element according to the invention;

figure 2 represents a cross-section according to line II-II in figure 1;

figure 3 is a schematic representation in perspective of the process according to the invention;

figures 4 and 5 respectively are cross-sections according to lines IV-IV and V-V in figure 3;

figure 6 is a representation in perspective of a special design of a binding element obtained from the process according to the invention;

figure 7 is a variation of figure 6.

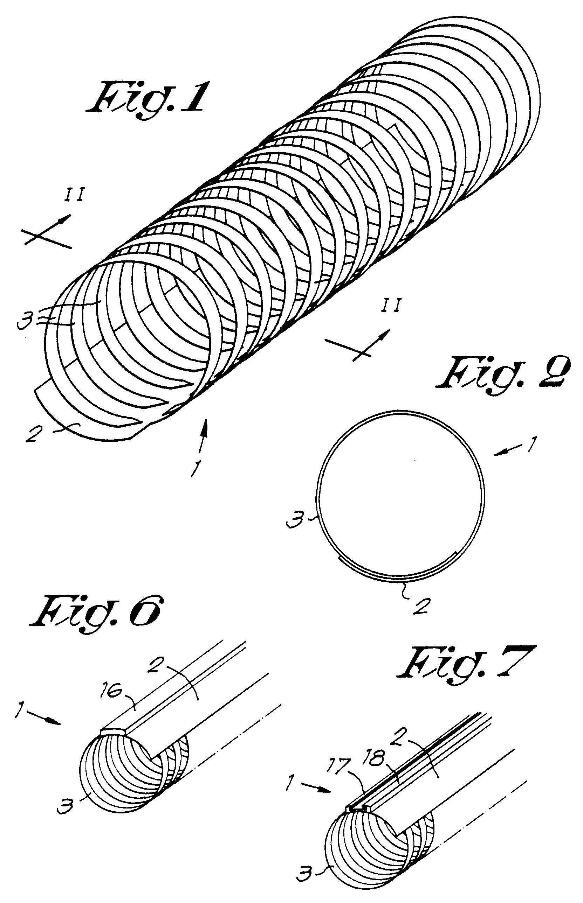

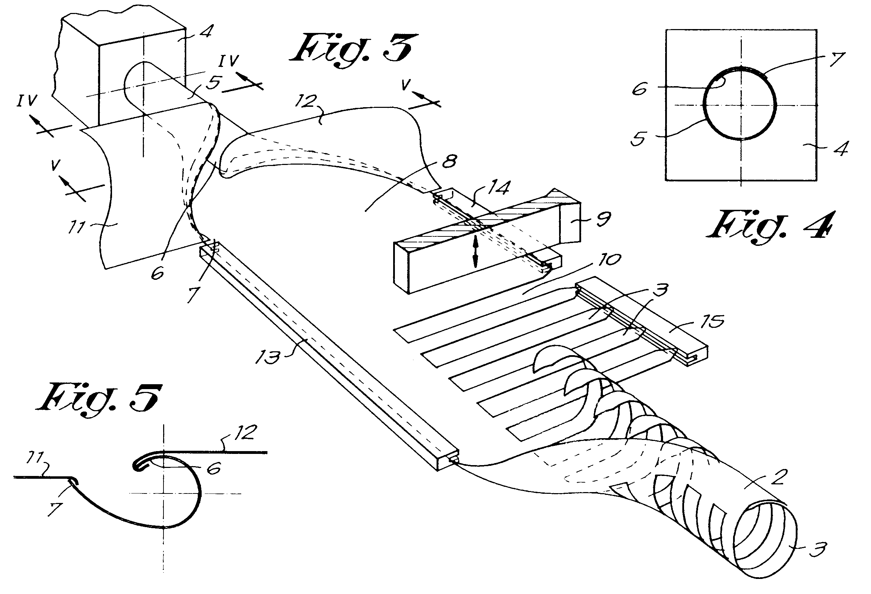

Figures 1 and 2 represent a cylindrical element 1 which is formed in a known way by a back 2 which is fitted on one edge with teeth 3, spaced in an appropriate manner and intended to join with perforations provided to this end in the documents to be bound.

Figure 3 is a schematic representation of the process according to the invention.

A cylindrical element 5 is extruded hereby from an extrusion machine 4, with overlapping edges 6 and 7, which clearly shows from figure 4.

Furthermore, according to the invention, the element 5, after it has hardened, is folded open until a flat strip 8 is obtained, after which by means of an appropriate cutting element 9, parts 10 are removed from the strip 8 in order to obtain teeth 3.

Finally when these teeth 3 are cut, the strip 8 is released so that it can automatically return to its original shape so that at that moment a ring element is automatically obtained as described in figure 1.

Figure 3 is a schematic representation of an installation formed by guides 11-12 which unfold the cylindrical element 5 and guides 13-14 and 16 which keep the strip 8 open.

It is clear that during the lengthwise extrusion of cylindrical element 5 various actions can be taken such as a flat part 16 as represented in figure 6; a label holder formed for example by L-shaped guides 17-18, as represented in figure 7; etc.

Moreover, as the label holder as represented in figure 7 is open it is also possible to form a closed label holder, for example by providing a transparent plastic window between the opposed parts of the L-shaped guides 17-18, which is possible by co-extrusion.

It is clear that the present invention is in no way limited to the embodiments described in the examples and represented in the enclosed drawings; the process according to the invention can be applied in various different combinations and can be obtained by any means without leaving the scope of the invention.

by co-extrusion.

## Claims

1. Process for the realization of binding elements, characterised in that it consists in the extrusion of a cylindrical element (5) with overlapping edges (6-7); the reshaping of this cylindrical element to a flat strip (8); the realization of teeth (3) in this strip (8); and the release of the above mentioned flat strip (8), so that the latter automatically returns to its cylindrical shape.

2. Process according to claim 1, characterised in that the above mentioned teeth (3) are obtained by the cutting away of intermediate parts (10).

3. Process according to claim 1 or 2, characterised in that the actual back part (2) provided behind the teeth (3) of the binding element (1) is provided with a flat part (16).

4. Process according to any of the above claims, characterised in that the actual back (2) provided behind the teeth (3) of binding element (1) is provided with a label holder (17-18).

5. Process according to claim 4, characterised in that the label holder (17-18) is formed by two inversed L-shaped guides, the free flanges of which are opposed to each other.

6. Process according to claim 4 or 5, characterised in that a transparant plastic window is provided between the free flanges of the L-shaped guides (17-18).

7. Process according to claim 6, characterised in that the transparent plastic window is obtained

Fig.1

Fig. 2

Fig. 6

Fig. 7

Fig. 3

Fig. 4

Fig. 5

EP 0 504 961 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-2 645 816 (TRUSSEL)<br>* column 2, line 22 - line 33; figures 1-7 *<br>--- | 1-7 | B42B5/10<br>B29C61/06 |
| Y | NL-A-7 713 055 (STAMICARBON BV)<br>* page 2, line 17 - page 3, line 22 *<br>* page 5, line 24 - line 29; claim 5; figures 1,4 *<br>--- | 1,2 | |
| Y | NL-A-7 908 852 (ELBA-ORDNER-FABRIEK KRAUT & MEIENBORN GMBH)<br>* claims 1,2,8,9; figure 1 *<br>--- | 3-7 | |
| A | US-A-4 374 627 (FRIEDMAN)<br>* column 2, line 57 - column 3, line 4 *<br>* column 3, line 41 - line 46 *<br>--- | 1-7 | |
| A | US-A-2 491 528 (SPINNER)<br>* column 1, line 6 - line 30 *<br>----- | 1,2 | |
| | | | TECHNICAL FIELDS SEARCHED (Int. Cl.5 )<br><br>B42B<br>B42F<br>B29C<br>B29D |

The present search report has been drawn up for all claims

| Place of search | Date of completion of the search | Examiner |
|---|---|---|
| THE HAGUE | 26 JUNE 1992 | BUFACCHI B.A.M. |